# EUROPEAN PATENT SPECIFICATION

(11) **EP 0 586 721 B1**
(45) Date of publication and mention of the grant of the patent: **27.12.1995**
(21) Application number: 92115122.1
(22) Date of filing: 04.09.1992
(51) Int. Cl.: A22C 25/18, B26D 1/16

(54) **Cutting method**
Verfahren zum Schneiden
Procédé à trancher

(43) Date of publication of application: 16.03.1994
(73) Proprietor: FRISCO-FINDUS AG, CH-9400 Rorschach (CH)
(72) Inventor: Wadell, Lars Gustaf Albert, S-262 33 Aengelholm (SE)
(74) Representative: Pate, Frederick George

(56) References cited:
- EP-A- 0 120 759
- WO-A-86/03441
- DE-A- 1 632 120
- DE-B- 1 299 103
- FR-A- 2 036 196
- GB-A- 978 760
- GB-A- 1 453 032
- GB-A- 2 178 644
- US-A- 3 196 917
- US-A- 4 043 003

## Description

The present invention relates to an apparatus for cutting frozen meat or fish blocks.

In the production of frozen fish products such as fish sticks or fish fingers the fish, as soon as possible after being caught is gutted, filleted into large pieces which are combined into blocks and the blocks are then deep frozen. The frozen blocks, which are very hard, are later sawn into smaller pieces known as planks which themselves are later cut into fish sticks or fish fingers.

In existing machines for cutting fish blocks or fish planks, the frozen blocks or planks are pressed through a circular saw unit whose shaft is in a fixed position. One obstacle is that great force is required to push the fish blocks or planks through the saw and this frequently leads to damaged blocks or planks especially if they have been kept in warm surroundings too long so that they become partially thawed. For instance, EP-A 278,309 describes a slab saw of standard design having a fixed circular knife shaft.

SU 309690 describes a method of cutting frozen fish into fillets using a machine having a non-rotating transverse guillotine knife which has an up-and-down reciprocating movement. Such a machine is a chopping machine and a disadvantage of chopping machines is that they tend to break the fish sticks, which results in increased waste losses.

We have now developed an apparatus of cutting frozen fish blocks or planks which does not require such a large push force on the blocks or planks: the only force required is that to push the blocks or planks from a hopper to a cutting position where a circular cutting device travels on its shaft through the blocks or planks to cut them into smaller pieces. The apparatus of this invention is also suitable for cutting frozen meat and, hereinafter, we will use the term "frozen meat or fish" to include frozen meat or fish pieces of any suitable size, for instance, frozen fish blocks or planks.

Accordingly, the present invention provides an apparatus for cutting frozen meat or fish blocks or planks comprising
a) a means for supporting the frozen meat or fish,
b) a means for conveying the frozen meat or fish to a stationary position,
c) a means for securing the frozen meat or fish in said stationary position, and
d) a cutting device having a plurality of parallel blades adapted to advance through the frozen meat or fish to cut it into smaller pieces,
characterised in that said cutting device is circular and advances on its shaft and in that the diameter of the blades increases gradually from the blades at the edges to the blades at the centre of the shaft.

The apparatus of this invention is particularly applicable to frozen fish planks for cutting them into fish sticks or fish fingers.

Advantageously, the circular cutting device is positioned beneath the frozen meat or fish in the stationary cutting position and it ascends on its shaft to perform the cutting operation. The fact that the diameter of the blades increases gradually from the blades at the edges to the blades at the centre ensures that the circular blades do not start cutting simultaneously and, therefore, the axle force is reduced so that a lower press force is required when cutting. In addition, jamming of the blades is less likely because the cut pieces will be free to move slightly for each cut.

The blades may be either circular saws or circular knives. The use of circular knives is especially advantageous because substantially no sawdust may be produced and the yields could be increased by approximately 6%. In a particularly preferred embodiment, the peripheral cutting edge of the circular knife blade is wave-shaped and, using such a blade, not only is substantially no sawdust produced but also cutting is easier and less force is needed on the knife shaft.

The frozen meat or fish may be conveyed into the stationary position for cutting either by means of a pusher onto a table or on an intermittently travelling conveyor belt. The frozen meat or fish may be secured in the stationary position by any suitable means, for instance, a clamp, a spring loaded locking bar or by a holding-on plate provided with recesses for blades of the circular cutting device.

The frozen meat or fish pieces are conveniently stacked one above the other in a hopper positioned above the belt.

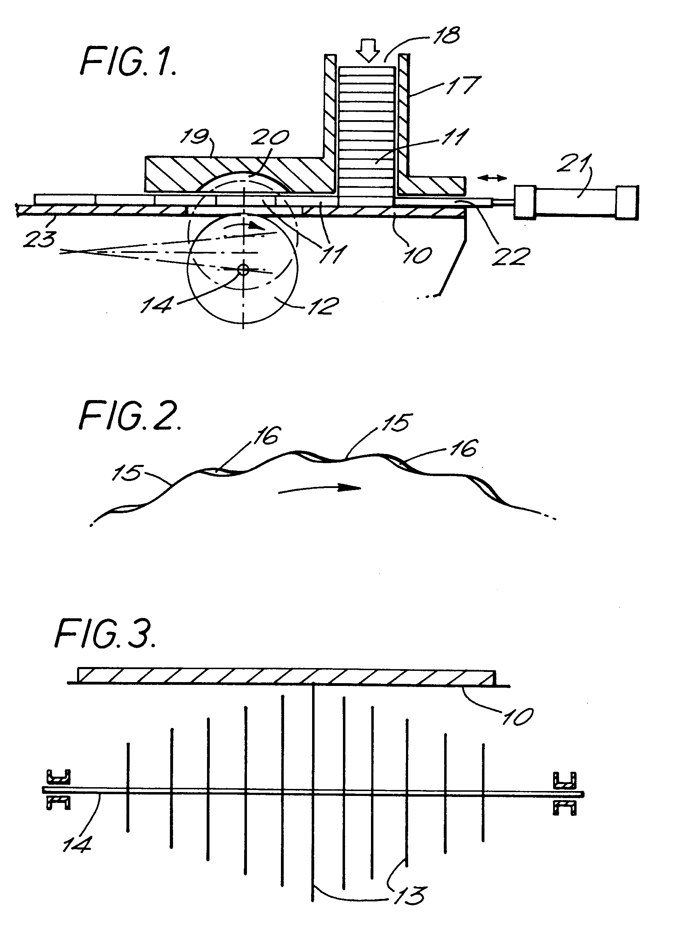

The present invention will now be further described by way of example only with reference to the accompanying drawings in which
Figure 1 represents a diagrammatic side view of an apparatus for cutting frozen fish planks,
Figure 2 represents an arc of the circumference of a circular knife blade having a wave-shaped cutting edge, and
Figure 3 represents a transverse view of a cutting device having a plurality of knives.

Referring to the drawings, the apparatus comprises a table 10 lying on which are frozen fish planks 11, a circular cutting knife 12 provided with a plurality of blades 13 supported on a shaft 14, the diameter of the blades gradually increasing from the edges to the centre of the shaft and each blade having a wave-shaped circumference with alternate troughs 15 and sharp-edged crests 16. A hopper 17, which contains a stack of frozen fish planks 11 supplied through an opening 18 at the top, is positioned above the table 10. A holding-on plate 19 provided with recesses for the circular blades is also positioned above the table opposite the circular cutting knife 12. Also shown is a pusher unit comprising a piston 21 and a plunger 22 and a spreading table 23.

In operation, the plunger 22 advances to the left as shown in the drawings and pushes the frozen fish plank 11 lying on the table at the bottom of the stack in the hopper leftwards along the table 10. The plunger retracts and the stack of frozen fish planks in the hopper fall so that the next one lies on the table. The plunger then advances again to push the second frozen fish plank 11 lying on the table at the bottom of the stack in the hopper leftwards along the table which in turn pushes the first frozen fish plank to a position directly above the circular cutting knife 12 where it is held firmly in position by the holding-on plate 19 for cutting.

The circular cutting knife 12 ascends on its shaft 14 so that the blades enter the recesses in the holding-on plate and cut the plank into a plurality of fish sticks. The circular knife then descends, the plunger 22 retracts allowing the lowest fish plank in the hopper to fall onto the table and then advances again and the cycle recommences. The cut fish sticks are pushed further to the left onto the spreading table 23 from where they are transferred for further processing.

The whole process may be synchronised and controlled for automatic operation, for instance, by a computer.

## Claims

1. An apparatus for cutting frozen meat or fish blocks or planks (11) comprising
a) a means (10) for supporting the frozen meat or fish,
b) a means for conveying the frozen meat or fish to a stationary position,
c) a means (21,22) for securing the frozen meat or fish (11) in said stationary position, and
d) a cutting device (12) having a plurality of parallel blades (13) adapted to advance (14) through the frozen meat or fish (11) to cut it into smaller pieces,
characterised in that said cutting device is circular and advances on its shaft and in that the diameter of the blades (13) increases gradually from the blades at the edges to the blades at the centre of the shaft.

2. An apparatus according to claim 1 wherein the frozen meat or fish (11) is conveyed into the stationary position for cutting by means of a pusher (22) onto a table (23).

3. An apparatus according to claim 1 wherein the frozen meat or fish (11) is secured in the stationary position by a holding-on plate (19).

4. An apparatus according to claim 1 wherein the circular cutting device (12) is positioned beneath the frozen meat or fish (11) in the stationary cutting position and it ascends on its shaft (14) to perform the cutting operation.

5. An apparatus according to claim 1 wherein the blades (13) of the circular cutting device (12) are circular knives.

6. An apparatus according to claim 5 wherein the peripheral cutting edge (15,16) of the circular knife (13) blade is wave-shaped.

## Patentansprüche

1. Vorrichtung zum Schneiden von Gefrierfleisch- oder Gefrierfischblöcken oder -platten (11), mit
a) einer Einrichtung (10) zum Tragen des Gefrierfleisches oder -fisches,
b) einer Einrichtung zum Transportieren des Gefrierfleisches oder -fisches zu einer vorgegebenen Position,
c) einer Einrichtung (21, 22) zum Festhalten des Gefrierfleisches oder -fisches (11) an dieser vorgegebenen Position und
d) einer Schneideeinrichtung (12) mit mehreren parallelen Klingen (13), die so ausgebildet sind, daß sie durch das Gefrierfleisch oder den Gefrierfisch (11) hindurchbewegt (14) werden können, um dieses bzw. diesen in kleinere Stücke zu zerschneiden,
dadurch gekennzeichnet,
daß diese Schneideeinrichtung kreisrund ist und mit ihrer Welle zugestellt wird, und daß der Durchmesser der Klingen (13) von den Enden der Welle zu deren Mitte hin allmählich zunimmt.

2. Vorrichtung nach Anspruch 1, bei der das Gefrierfleisch oder der Gefrierfisch (11) zum Schneiden mittels eines Schiebers (22) zur vorgegebenen Position auf einem Tisch (23) transportiert wird.

3. Vorrichtung nach Anspruch 1, bei der des Gefrierfleisch oder der Gefrierfisch (11) an der vorgegebenen Position durch eine Andruckplatte (19) festgehalten wird

4. Vorrichtung nach Anspruch 1, bei der die kreisrunde Schneideeinrichtung (12) unterhalb des sich an der vorgegebenen Schneideposition befindenden Gefrierfleisches oder -fisches (11) angeordnet ist und zur Ausführung des Schneidvorgangs mit ihrer Welle (14) gehoben wird.

5. Vorrichtung nach Anspruch 1, bei der die Klingen (13) der kreisrunden Schneideeinrichtung (12) Kreismesser sind.

6. Vorrichtung nach Anspruch 5, bei der die Schneide (15, 16) am Rand des Kreismessers (13) wellenförmig ist.

## Revendications

1. Appareil pour trancher des blocs ou des planches (11) de viande ou de poisson surgelé, comprenant
a) un moyen (10) pour supporter la viande ou le poisson surgelé,
b) un moyen pour amener la viande ou le poisson surgelé jusqu'à une position fixe,
c) un moyen (21, 22) pour immobiliser la viande ou le poisson surgelé (11) dans ladite position fixe, et
d) un dispositif de tranchage (12) possédant une pluralité de lames parallèles (13) conçues pour pénétrer (14) dans la viande ou le poisson surgelé (11) afin de le couper en plus petits morceaux,
caractérisé en ce que ledit dispositif de tranchage est circulaire et avance sur son arbre, et en ce que le diamètre des lames (13) augmente progressivement à partir des lames situées sur les bords jusqu'aux lames situées au centre de l'arbre.

2. Appareil selon la revendication 1, caractérisé en ce que la viande ou le poisson surgelé (11) est amené en position fixe pour le tranchage, au moyen d'un poussoir (22) évoluant sur une table (23).

3. Appareil selon la revendication 1, caractérisé en ce que la viande ou le poisson surgelé (11) est immobilisé en position fixe par une plaque de maintien (19).

4. Appareil selon la revendication 1, caractérisé en ce que le dispositif de tranchage circulaire (12) se trouve en dessous de la viande ou du poisson (11) surgelé placé en position fixe de tranchage, et il s'élève sur son arbre (14) pour réaliser le tranchage.

5. Appareil selon la revendication 1, caractérisé en ce que les lames (13) du dispositif de tranchage circulaire (12) sont des couteaux circulaires.

6. Appareil selon la revendication 5, caractérisé en ce que l'arête de coupe périphérique (15, 16) de la lame du couteau circulaire (13) est de forme ondulée.
